# EUROPÄISCHE PATENTANMELDUNG

(11) **EP 3 944 139 A1**
(43) Veröffentlichungstag der Anmeldung: **26.01.2022**
(21) Anmeldenummer: 21185785.9
(22) Anmeldetag: 15.07.2021
(51) Int. Cl.: G06K 9/00, G06T 5/00

(54) **VORRICHTUNG UND VERFAHREN ZUR ERZEUGUNG EINER BRILLENGLASLOSEN ODER BRILLENLOSEN ABBILDUNG EINER PERIOKULAREN REGION EINER BEBRILLTEN PERSON**

(30) Priorität: 21.07.2020 DE 102020119120
(71) Anmelder: Bundesdruckerei GmbH, 10969 Berlin (DE)
(72) Erfinder: Wolf, Andreas, 13158 Berlin (DE)
(74) Vertreter: Hentrich Patentanwälte PartG mbB

(57) **Zusammenfassung**

Die Erfindung betrifft eine Vorrichtung (100) zur Erzeugung einer brillenlosen Abbildung einer periokularen Region (104) von einer bebrillten Person, mit einer Kamera (101) zur Erfassung der periokularen Region (104) der Person, sowie mit einer mit der Kamera (101) verbundenen Auswerteeinheit (102), die mittels des von der Kamera (101) gelieferten Bilds ausgebildet ist, Pixel eines Verlaufs (115a, 115b, 115c, 115d) mindestens eines sich in der periokularen Region (104) befindlichen Gesichtzugs (115) der bebrillten Person abseits eines Brillenrands (116) und abseits eines Brillenglases (114) zu identifizieren, diejenigen Pixel im Verlauf (115a, 115b, 115c, 115d) des Gesichtszugs (115) zu erfassen, die einer durch das Brillenglas (114) hervorgerufenen Verzeichnung des Gesichtszugs (115) entsprechen, wenigstens eine Regel aus dem Verlauf (115a, 115b, 115c, 115d) der verzeichneten Pixel abzuleiten oder anzuwenden, und anschließend alle im Bereich des Brillenglas (114) enthaltenen Pixel entsprechend der ermittelten oder angewendeten Regel derart zu versetzen, dass die brillenlose Abbildung der periokularen Region (104) entsteht. Die Erfindung betrifft außerdem ein entsprechendes Verfahren, eine Zugangskontrolle und ein Verfahren zur Gewährung oder Verweigerung eines Zugangs.

## Beschreibung

Die Erfindung betrifft eine Vorrichtung und ein Verfahren zur Erzeugung einer brillenlosen, vorzugsweise biometrischen Abbildung einer periokularen Region einer bebrillten Person. Die Erfindung betrifft darüber hinaus eine Zugangskontrolle umfassend die Vorrichtung und ein Verfahren zur Gewährung oder Verweigerung eines Zugangs.

Bilder, insbesondere Passbilder sollten eine möglichst eindeutige Identifizierung der abgebildeten Person ermöglichen. Das Tragen von Brillen kann eine solche Identifizierung erschweren, insbesondere wenn sie automatisiert erfolgt. Brillen, vor allem Brillen mit auffälligen Brillengestellen, können den Eindruck eines Gesichts verändern und auch biometrische Merkmale, wie beispielsweise der Augenabstand, können wegen der optischen Effekte der Brillengläser verzerrt bzw. verändert erscheinen. Somit beeinträchtigen Brillen die Leistung von biometrischen Gesichtserkennungssystemen. Eine Möglichkeit, die Identifizierung zu verbessern, liegt in der Aufforderung die Brille während der Erstellung des Gesichtsbildes bzw. Passbildes abzunehmen. Dies ist allerdings, insbesondere für stark fehlsichtige Menschen, nicht nur unangenehm sondern kann dazu führen, dass diese Menschen die Augen stark zukneifen, um Anweisungen an einem Terminal oder einem Bedienfeld lesen zu können. Dies wirkt einem gewünschten neutralen Blick der Person beim Identifizierungsvorgang oder beim Bilderstellungsvorgang entgegen.

Die DE 10 2017 119 625 A1 verweist auf die Möglichkeit, das bebrillte Gesicht mit einer Struktur zu beleuchten, um die sich aufgrund der Brillengläser ergebende Verzeichnung zu ermitteln. Anschließend wird die Verzeichnung aus der Aufnahme herausgerechnet, so dass ein brillenloses Gesichtsbild entsteht. Die darin beschriebene Vorrichtung und das darin beschriebene Verfahren haben sich gut für die Erkennung biometrischer Merkmale bei Brillenträgern bewährt.

Die automatische Identifizierung einer Person ist jedoch in denjenigen Fällen erschwert, in denen Bereiche des Gesichts bedeckt sind, sei es beispielsweise durch das Tragen eines Schals oder einer Mütze, die aufgrund der Witterungsverhältnisse weit ins Gesicht ragen, oder sei es beispielsweise aufgrund der Verwendung einer Mund-Nasen-Schutzmaske zum Eigen- oder zum Fremdschutz vor Erregern wie Bakterien oder Viren. Es hat sich außerdem herausgestellt, dass die vollständige Erfassung des Gesichts mit seinen biometrischen Merkmalen sowie deren weitere Verarbeitung mit einem erhöhten Rechenaufwand verbunden sind.

Der Erfindung liegt daher die Aufgabe zugrunde, eine vereinfachte Vorrichtung, ein vereinfachtes Verfahren zur Erzeugung einer brillenlosen Abbildung der periokularen Region von einer bebrillten Person, eine vereinfachte Zugangskontrolle und ein vereinfachtes Verfahren zur Gewährung oder Verweigerung eines Zugangs anzugeben, die die Identifizierung von Personen auch dann erlaubt, wenn weitere Bereiche des Gesichts der bebrillten Person verdeckt sind.

Diese Aufgabe wird durch eine Vorrichtung mit den Merkmalen des Anspruchs 1, durch eine Zugangskontrolle mit den Merkmalen des Anspruchs 7, durch ein Verfahren mit den Merkmalen des Anspruchs 9 und durch ein Verfahren mit den Merkmalen des Anspruchs 15 gelöst. Vorteilhafte Ausgestaltungen mit zweckmäßigen Weiterbildungen der Erfindung sind in den abhängigen Ansprüchen angegeben.

Die erfindungsgemäße Vorrichtung zur Erzeugung einer brillenlosen Abbildung einer periokularen Region von einer bebrillten Person umfasst insbesondere eine Kamera zur Erfassung der periokularen Region der Person, sowie eine mit der Kamera verbundene Auswerteeinheit, die ausgebildet ist, anhand des von der Kamera gelieferten Bilds,
- Pixel eines Verlaufs mindestens eines sich in der periokularen Region befindlichen Gesichtzugs der bebrillten Person abseits eines Brillenrands und abseits eines Brillenglases zu identifizieren,
- diejenigen Pixel im Verlauf des Gesichtszugs zu erfassen, die einer durch das Brillenglas hervorgerufenen Verzeichnung des Gesichtszugs entsprechen,
- wenigstens eine Regel aus dem Verlauf der verzeichneten Pixel abzuleiten oder anzuwenden, und
- anschließend alle im Bereich des Brillenglas enthaltenen Pixel entsprechend der ermittelten oder angewendeten Regel derart zu versetzen, dass die brillenlose Abbildung der periokularen Region entsteht.

Auf diese Weise wird lediglich die periokulare Region, also die Region der Augen ohne die Iriden, des Benutzers ausgelesen und ggfs. mit Referenzdaten verglichen. Diese Vorrichtung eignet sich in besonderem Maße für den Abgleich der Daten eines Identitätsdokuments, insbesondere eines Reisepasses, denn ein solches ist zumeist nicht mit den Daten einer oder beider Iriden versehen. Zugleich lässt sich mit der Vorrichtung zuverlässig die Verzeichnung des durch die Brillengläser gebrochenen Lichts anhand der ermittelten Regel herausrechnen, so dass ein Benutzer die Brille für eine zuverlässige Identifizierung nicht abnehmen muss.

Die Kamera dient dabei der Erzeugung einer Abbildung der periokularen Region der bebrillten Person, wobei die Auswerteeinheit mit anderen Worten derart ausgestaltet ist, die Brille aus der Abbildung mit Hilfe einer Bildbearbeitungsanwendung zu entfernen. Für die Brillenerkennung und deren Herausrechnen werden optische Effekte berücksichtigt, wobei beispielsweise die Brechung am Glasrand des Brillenglases bzw. die Verzeichnung durch die Krümmung des Glases oder dergleichen erfasst und für die Erstellung des finalen Bilds eliminiert werden. Die Auswerteeinheit selbst kann in Form eines Computers vorliegen und diverse Ein- und/oder Ausgabeeinheiten umfassen. Die Auswerteeinheit umfasst vorzugsweise einen eigenständigen Prozessor (bspw. einen Mikroprozessor) mit in dessen Speicher abgelegten und ausführbaren Echtzeitbetriebssystem (RTOS=real-time operating system) und ggfs. eine oder mehrere Anwendungen (Applications) zur Erzeugung einer brillenlosen oder brillengestelllosen Abbildung der periokularen Region der bebrillten Person.

Dabei ist es bevorzugt als Gesichtszüge ein im Vergleich zu den dazu benachbarten Bereichen (insbesondere bezüglich der Haut/Hautfarbe der Person) kontrastreicheres Objekt/Gesichtszug aus der periokularen Region des Gesichts der bebrillten Person zu wählen. Hierbei kommt insbesondere eine Falte, beispielsweise am Augenlied oder am Augenwinkel (Krähenfüße), ein Leberfleck, ein Muttermal, eine Narbe, eine oder mehrere Sommersprossen, eine Augenbraue, ein Augenring, Blutgefäße oder Wimpern. Dabei wird vorzugsweise der Verlauf eines derartigen Gesichtszugs abseits des Brillenrands oder abseits des Brillenglases mit dem Verlauf innerhalb des Brillenglases verglichen.

Die Vorrichtung kann dabei sowohl dem Erstellen eines brillenlosen Bilds der periokularen Region zur Verwendung in einem Pass, als auch der Erzeugung eines Identifizierungsbildes zum Abgleich mit einem Passbild zum Beispiel an einem ABC-System/Terminal (engl. "automated border control") dienen. Insbesondere für den letztgenannten Fall ist es von Vorteil, wenn die Auswerteeinheit ausgebildet ist, die brillenlose Abbildung der periokularen Region der bebrillten Person mit einem Referenzbild zu vergleichen.

Der Abgleich mit dem Referenzbild eröffnet die Möglichkeit einer automatisierten Zugangskontrolle, insbesondere dann, wenn die Vorrichtung zusätzlich ein Lesegerät umfasst, das ausgebildet ist, ein mit dem Referenzbild versehenes Identitätsdokument einzulesen. Das eingelesene Referenzbild kann dann für den Abgleich des von der Kamera erfassten - um die Brillengläser und das Brillengestell - bereinigte Abbild der periokularen Region genutzt werden.

Um die benötigte Rechenleistung bei der Erstellung der brillenlosen vorzugsweise biometrischen Abbildung zu minimieren ist es von Vorteil, wenn die Auswerteeinheit ausgebildet ist, die Merkmalspunkte 5.3 und 5.4 sowie 4.3 und 4.4 nach der ISO/IEC 14496-2:1999 zu identifizieren und den Bereich des Bilds, der außerhalb eines durch die fiktive Verbindungsgeraden zwischen den Merkmalspunkten 5.3 und 5.4 sowie 4.3 und 4.4 nach der ISO/IEC 14496-2:1999 begrenzten Bereichs liegt, zu löschen oder unberücksichtigt zu lassen. In anderen Worten ist die Auswerteeinheit eingerichtet, die periokulare Region zu identifizieren und diejenige Bildinformation, die außerhalb der periokularen Region liegt, zu löschen oder zumindest auszublenden, so dass diese Bildinformation außerhalb der periokularen Region bei der Erzeugung der brillenlosen Abbildung unberücksichtigt bleibt.

Eine vereinfachte elektronische Verarbeitung der biometrischen Daten lässt sich dadurch erzielen, dass die Kamera ausgebildet ist, ausschließlich den Bereich zu erfassen, der durch fiktive Verbindungsgeraden zwischen den Merkmalspunkten 5.3 und 5.4 sowie 4.3 und 4.4 nach ISO/IEC 14496-2 (Stand: 1999) begrenzt und vorgegeben ist, also ausschließlich den periokularen Bereich zu erfassen.

Vorzugsweise ist die Auswerteeinheit ausgebildet, die Verzeichnung des Verlaufs des Gesichtszugs anhand einer Ermittlung von Unstetigkeitsstellen und/oder Knickstellen des Verlaufs zu ermitteln. Um präzise Daten für Aufstellung einer Regel für das "Herausrechnen" der Brille bereitzustellen, hat es sich ferner als vorteilhaft erwiesen, wenn mehr als ein Gesichtszug identifiziert wird, und wenn für die mehreren Gesichtszüge eine Verzeichnung des Verlaufs erfasst wird.

Zur Auflösungsverbesserung - und damit zur Erhöhung der Bildqualität einer Abbildung der periokularen Region - ist es ferner vorteilhaft, wenn mindestens eine weitere Kamera zur Aufnahme mindestens einer weiteren Abbildung der periokularen Region vorgesehen ist. Durch den Einsatz der weiteren Kamera ist es nun möglich, etwaig fehlende Bildinformationen zu ergänzen, die beim Entfernen des Brillengestells und/oder bei der Kompensation der optischen Effekte der Brillengläser entstanden sind. Durch die zusätzliche Kamera werden mit anderen Worten also zusätzliche Bildinformationen der periokularen Region des Benutzers gesammelt. In diesem Zusammenhang ist es also vorteilhaft, wenn die weitere Kamera der Vorrichtung im Vergleich zur ersten Kamera unter einem anderen Neigungswinkel bezüglich der periokularen Region des Benutzers angeordnet ist. Somit liegen also zwei unterschiedliche Blickwinkel auf die periokulare Region der bebrillten Person vor.

Die erfindungsgemäße, insbesondere automatische, Zugangskontrolle zeichnet sich insbesondere dadurch aus, dass die Auswerteeinheit ausgebildet ist, die brillenlose Abbildung der periokularen Region der bebrillten Person mit einem Referenzbild zu vergleichen und bei einer Übereinstimmung der brillenlosen Abbildung der periokularen Region mit dem Referenzbild den Zugang zu gewähren und bei einer Abweichung den Zugang zu verweigern. Der Vorteil besteht dabei darin, dass die bebrillte Person bei der Zugangskontrolle ihre Brille nicht ablegen muss und dennoch eine eindeutige Identifizierung der Person ermöglicht wird.

Weiterhin ist es bevorzugt, wenn ein Lesegerät vorhanden ist, dass ausgebildet ist, ein mit dem Referenzbild versehenes Identitätsdokument einzulesen. Dies ermöglicht das Einlesen des Identitätsdokuments im Rahmen der Zugangskontrolle. Das eingelesene Referenzbild kann dann für den Abgleich des von der Kamera erfassten - um die Brillengläser und das Brillengestell - bereinigte Abbild der periokularen Region genutzt werden.

Das erfindungsgemäße Verfahren zur Erzeugung einer brillenglaslosen oder brillenlosen Abbildung einer periokularen Region von einer bebrillten Person, umfasst insbesondere die folgenden Schritte:
A) Erfassen eines periokularen Bereichs der bebrillten Person mittels einer Kamera,
B) Identifizieren von Pixel eines Verlaufs wenigstens eines Gesichtszugs der bebrillten Person abseits eines Brillenrands und abseits eines Brillenglases,
C) Erfassen derjenigen Pixel im Verlauf des Gesichtszugs, die einer durch das Brillenglas hervorgerufenen Verzeichnung des Gesichtszugs entsprechen,
D) Ableiten oder Anwenden einer Regel aus dem Verlauf der verzeichneten Pixel, und
E) Versetzen aller im Bereich des Brillenglases enthaltenen Pixel entsprechend der ermittelten oder angewendeten Regel, derart, dass die brillenlose Abbildung der periokularen Region entsteht.

Damit ist der Vorteil verbunden, dass eine zuverlässige Erfassung der periokularen Region auch dann ermöglicht ist, wenn der Benutzer eine Brille trägt. Mit dem Verfahren wird dabei lediglich die periokulare Region, also die Region der Augen ohne die Iriden, der bebrillten Person ausgelesen und in einer Abbildung "ohne Brille" erfasst.

Mit diesem Verfahren wird es einer Person ermöglicht, die Brille auch während des Aufnahmeprozesses zu tragen. Dennoch wird eine nahezu eindeutige Abbildung des periokularen Bereichs erzeugt, welches eine verbesserte - ggfs. automatische - Identifizierung der Person erlaubt. Dabei wird die Brille der Person nachträglich entfernt und die durch sie hervorgerufenen optischen Effekte - weitestgehend - beseitigt.

Dabei ist es bevorzugt als Gesichtszüge ein im Vergleich zu den dazu benachbarten Bereichen (insbesondere bezüglich der Haut/Haufarbe der Person) kontrastreicheres Objekt/Gesichtszug aus der periokularen Region des Gesichts der bebrillten Person zu wählen. Hierbei kommt insbesondere eine Falte, beispielsweise am Augenlied oder am Augenwinkel (Krähenfüße), ein Leberfleck, ein Muttermal, eine Narbe, eine oder mehrere Sommersprossen, eine Augenbraue, ein Augenring, Blutgefäße oder Wimpern. Dabei wird vorzugsweise der Verlauf eines derartigen Gesichtszugs abseits des Brillenrands oder abseits des Brillenglases mit dem Verlauf innerhalb des Brillenglases verglichen.

Für eine eindeutige Identifizierung der bebrillten Person ausschließlich anhand ihrer periokularen Region ist es von Vorteil, wenn der Auswerteeinheit ein Referenzbild bereitgestellt wird, und wenn die brillenlose Abbildung der periokularen Region mit dem Referenzbild verglichen wird. Auf diese Weise kann das Verfahren auch für die automatische Zugangskontrolle genutzt werden.

Für eine vereinfachte Personenkontrolle im Straßenverkehr oder auch an einer Grenze ist es bevorzugt, wenn das Referenzbild auf einem Identitätsdokument angebracht ist, und wenn das mit dem Referenzbild versehene Identitätsdokument mit einem Lesegerät eingelesen wird, bevor es mit der brillenlosen Abbildung verglichen wird.

Es ist bei der Erstellung von Portraits für maschinenlesbare Reisedokumente (MRTD=Machine Readable Travel Documents) empfohlen, dass im Bild näherungsweise 120 Information tragende Pixel im interokularen Abstand enthalten sind, damit Strukturen, die einen Millimeter (mm) groß sind, im Bild erkennbar bleiben. Demgegenüber setzen sowohl die Vorrichtung als auch das Verfahren vorzugsweise eine erhöhte Auflösung ein. Der interokulare Abstand umfasst beispielsweise mehr als 360 Pixel, welche die Bildinformationen tragen. Dabei entstehen Abbildungen der periokularen Region mit einer Gesamtbildbreite von mehr als 1.800 Pixeln. Diese Werte sind Richtwerte, so dass Abweichungen, auch nach unten, erlaubt sind, so lange sie nicht übermäßig groß sind. Eine Abweichung nach unten um maximal 10 Prozent erscheint möglich. Die Abbildungen werden außerdem vorzugsweise aus einem Videostream extrahiert. Dies alles gewährleistet, dass ein ausreichend gutes Datenmaterial für die Durchführung des erfindungsgemäßen Verfahrens, insbesondere für die Identifizierung und die Erfassung des Verlaufs eines Gesichtszugs der bebrillten Person vorhanden ist. Die größere Datenmenge erlaubt einen schnelleren Ausgleich der durch die Brillengläser hervorgerufenen Effekte und Verrechnungen und Entzerrungen lassen sich einfacher für die "fertige" (endgültige) Abbildung des periokularen Bereichs eliminieren.

Um die benötigte Rechenleistung bei der Erstellung der brillenlosen vorzugsweise biometrischen Abbildung zu minimieren ist es von Vorteil, wenn die Auswerteeinheit (102) die Merkmalspunkte 5.3 und 5.4 sowie 4.3 und 4.4 nach der ISO/IEC 14496-2:1999 identifiziert und den Bereich, der außerhalb eines durch die fiktive Verbindungsgeraden zwischen den Merkmalspunkten 5.3 und 5.4 sowie 4.3 und 4.4 nach der ISO/IEC 14496-2:1999 begrenzten Bereichs liegt, zu löschen oder unberücksichtigt zu lassen. In anderen Worten identifiziert die Auswerteeinheit die periokulare Region und löscht oder blendet zumindest diejenige Bildinformation aus, die außerhalb der periokularen Region liegt, so dass diese bei der Erzeugung der brillenlosen Abbildung unberücksichtigt bleibt.

Im Zuge der Datensparsamkeit und einer vereinfachten Verarbeitung der erfassten Datenmenge ist es - anstelle der Aufzeichnung des gesamten Gesichts der Person - von Vorteil, wenn von der Kamera ausschließlich der Bereich erfasst wird, der durch fiktive Verbindungsgeraden zwischen den Merkmalspunkten 5.3 und 5.4 sowie 4.3 und 4.4 nach ISO/IEC 14496-2 (Stand: 1999) begrenzt und vorgegeben ist.

Die Ermittlung der den Brillengläsern zugeordneten Pixel bzw. der der Brille zugeordneten Pixel erfolgt dabei beispielsweise durch eine Randerkennung, durch eine Kontrasterkennung oder durch eine Farberkennung.

Die durch die Brillengläser hervorgerufenen optischen Effekte umfassen dabei Abbildungsfehler, die Brechung des Lichts am Rand der Brillengläser, sowie diejenigen Abbildungseffekte, die durch konvexe und/oder konkave Linsenformen hervorgerufen werden; im Allgemeinen spricht man hier von einer sogenannten "Verzeichnung", welche ihrerseits die Regel für eine Pixelversetzung vorgibt.

Um zusätzlich auch das Brillengestell aus dem von der Kamera erfassten Bild entfernen zu können, hat es sich als vorteilhaft erwiesen, wenn mittels der Auswerteeinheit diejenigen Gestellpixel erfasst werden, die eindeutig einem Brillengestell der Brille zugeordnet sind, und wenn die Auswerteeinheit diese Gestellpixel zur Erzeugung einer Abbildung der brillenlosen periokularen Region substituiert werden. Die Substitution der Gestellpixel kann dabei entweder durch Extrapolation der zu den Gestellpixel benachbarten Pixel erfolgen. Dies stellt eine einfache und bei vergleichsweise dünnen Brillengestellen ausreichende Substitutionsmöglichkeit dar. Bevorzugt ist es allerdings, wenn die Substitution der Gestellpixel über eine zusätzliche Aufnahme ggfs. unter Zuhilfenahme einer weiteren Kamera erfolgt. Die Zusätzliche Aufnahme kann dann fehlende Bildinformationen ergänzen, die beim Entfernen des Brillengestells und/oder bei der Kompensation der optischen Effekte der Brillengläser entstanden sind.

Eine Pixelergänzung kann auch lediglich einzelfallbezogen erforderlich sein. Es ist deshalb von Vorteil, wenn nach einem ersten Erfassen der periokularen Region und der Erzeugung einer ersten brillenlosen Abbildung der periokularen Region geprüft wird, ob in der ersten Abbildung Pixel zur vollständigen Wiedergabe der periokularen Region fehlen, und wenn die periokulare Region wenigstens einmal erneut unter einem anderen Winkel als beim ersten Erfassen erfasst wird, damit eine Vervollständigung der periokularen Region - ohne Brille/-gestell - erfolgen kann.

Es ist in einer Weitergestaltung auch möglich, Falschpixel oder doppelt vorhandene Pixel zu identifizieren. Falschpixel sind Pixel, die als fehlende Bildinformation entstehen nach der Kompensation der durch die Brillengläser bzw. Krümmung der Linsen auftretenden optischen Effekte. In Abhängigkeit der Linsenkrümmung der Brillengläser können manche Bereiche der periokularen Region auch doppelt auftreten, so dass sich doppelt vorhandene Pixel eliminieren bzw. korrigieren lassen.

Um möglichst viele Bildinformationen bei der Erfassung des periokularen Bereichs zu erhalten, hat es sich ferner als vorteilhaft erwiesen, wenn der Person bei der Aufnahme der Abbildung Anweisungen erteilt werden, den Kopf in unterschiedliche Richtungen zu neigen. Auf diese Weise lassen sich zumeist auch die hinter einem Brillengestell liegenden Bereiche der periokularen Region verbessert erfassen.

Das erfindungsgemäße Verfahren zur Gewährung oder Verweigerung eines Zugangs von einer bebrillten Person, umfasst insbesondere die folgenden Schritte:
- Erzeugen einer brillenlosen Abbildung mittels des zuvor beschriebenen Verfahrens,
- Vergleich der erzeugten brillenlosen Abbildung mit einem Referenzbild mittels der Auswerteeinheit,
- Gewähren des Zugangs bei einer Übereinstimmung der erzeugten brillenlosen Abbildung mit dem Referenzbild und Verweigern des Zugangs bei einer Abweichung der erzeugten Abbildung von der Referenzabbildung.

Der Vorteil besteht dabei darin, dass die bebrillte Person bei der Zugangskontrolle ihre Brille nicht ablegen muss und dennoch eine eindeutige Identifizierung der Person ermöglicht wird. Weiterhin ist es von Vorteil, wenn im Rahmen des Verfahrens ein mit dem Referenzbild versehenes Identifikationsdokument mittels eines Lesegeräts eingelesen wird. Das eingelesene Referenzbild kann dann für den Abgleich des von der Kamera erfassten - um die Brillengläser und das Brillengestell - bereinigte Abbild der periokularen Region genutzt werden.

Abschließend wird darauf verwiesen, dass der Abgleich der Abbildung der erfassten, um die Brille bereinigten, periokularen Region mit den Referenzdaten mit einem für einen Fachmann bekannten Verfahren zur Biometrie-Erkennung erfolgen kann. Alternativ oder ergänzend kann aber auch ein ein neuronales Netz nutzender Klassifikator Einsatz finden.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen. Dabei zeigen:
- Fig. 1: eine Vorrichtung zur Erzeugung einer brillenglaslosen oder brillenlosen Abbildung der periokularen Region einer bebrillten Person anhand einer schematischen Seitenansicht;
- Fig. 2: eine zweite Vorrichtung zur Erzeugung einer brillenglaslosen oder brillenlosen Abbildung der periokularen Region einer bebrillten Person mit einer weiteren Kamera anhand einer schematischen Seitenansicht; und
- Fig. 3: eine schematische Darstellung einer Vielzahl von Gesichtszügen der bebrillten Person im periokularen Bereich.

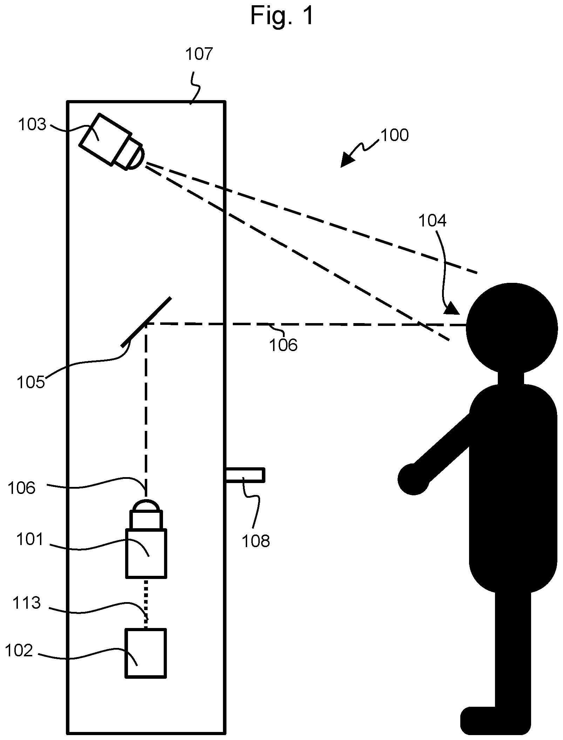

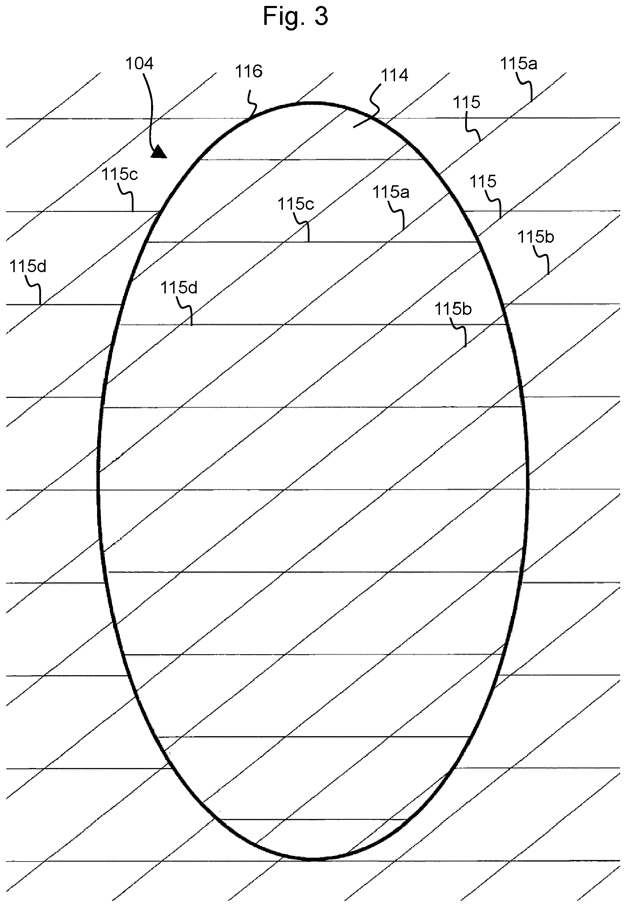

Figur 1 zeigt exemplarisch eine Vorrichtung 100 zur Erzeugung einer brillenlosen, vorzugsweise biometrischen Abbildung einer periokularen Region 104 von einer bebrillten Person, mit einer Kamera 101 zur Erfassung der periokularen Region 104 der Person und mit einer mit der Kamera 101 über eine Kommunikationsverbindung 113 verbundenen Auswerteeinheit 102. Die Auswerteeinheit 102 ist ausgebildet, anhand des von der Kamera 101 gelieferten Bilds die Pixel eines Verlaufs 115a, 115b, 115c, 115d mindestens eines sich in der periokularen Region 104 befindlichen Gesichtzugs 115 der bebrillten Person abseits eines Brillenrands 116 und abseits eines Brillenglases 114 zu identifizieren (Fig. 3). Ferner ist die Auswerteeinheit 102 ausgebildet, diejenigen Pixel im Verlauf 115a, 115b, 115c, 115d des Gesichtszugs 115 zu erfassen, die einer durch das Brillenglas 114 hervorgerufenen Verzeichnung des Gesichtszugs 115 entsprechen. Die Auswerteeinheit 102 kann dann wenigstens eine Regel aus dem Verlauf der verzeichneten Pixel ableiten und auf das von der Kamera 102 erfasste Bild anwenden. Die Auswerteeinheit 102 ist ferner ausgebildet, anschließend alle im Bereich des Brillenglas 114 enthaltenen Pixel entsprechend der ermittelten oder angewendeten Regel derart zu versetzen, dass die brillenlose Abbildung der periokularen Region 104 entsteht.

Die exemplarisch gezeigte Vorrichtung 100 umfasst außerdem ein Projektionsmittel 103 zur Beleuchtung des Gesichts der Person, wodurch sich aufgrund der verstärkten Ausleuchtung der Szene zusätzliche Gesichtszüge 115 in der periokularen Region 104 identifizieren lassen. Das Projektionsmittel 103 richtet die Beleuchtung unter einem von Null Grad verschiedenen Winkel auf die periokulare Region 104, um die Person nicht (allzu sehr) zu blenden.

In der der Person zugewandten Gehäusefront der Vorrichtung 100 sind Öffnungen ausgebildet, durch die der Strahlengang 106 zwischen der Kamera 101 und dem Gesicht 104 hindurchtreten kann. Die Kamera 101 ist im gezeigten Beispiel auf einen Spiegel 105 gerichtet, so dass der Strahlengang 106 der Kamera 101 gefaltet ist, um einen größeren Abstand zwischen der Kamera 101 und dem Gesicht 104 herzustellen. Die Kamera 101 ist vorliegend ausgebildet, ausschließlich den Bereich zu erfassen, der durch fiktive Verbindungsgeraden zwischen den Merkmalspunkten 5.3 und 5.4 sowie 4.3 und 4.4 nach ISO/IEC 14496-2 (Stand: 1999) begrenzt und vorgegeben ist. Es ist außerdem zu erkennen, dass die Vorrichtung 100 mit einem Lesegerät 108 versehen ist, das ausgebildet ist, ein mit einem Referenzbild versehenes Identitätsdokument, insbesondere einen Reisepass, einzulesen.

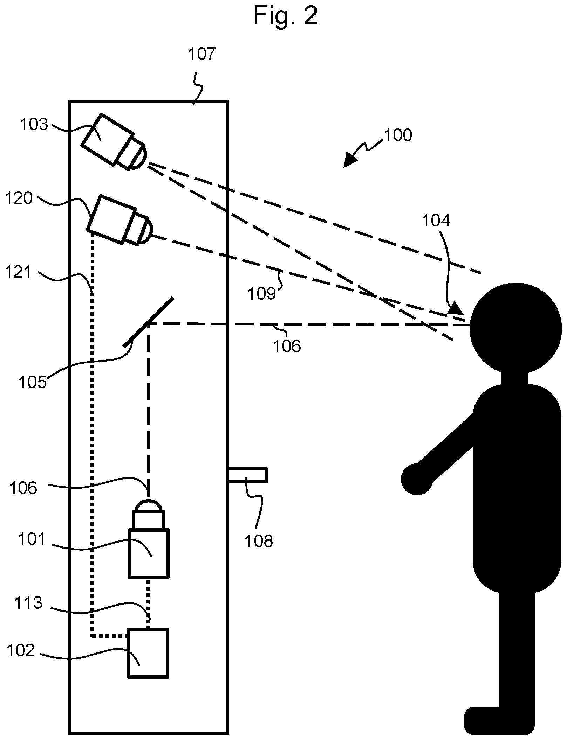

Figur 2 zeigt eine weitere Vorrichtung 100, die im Wesentlichen derjenigen aus Figur 1 entspricht. Die hier gezeigte Vorrichtung 100 ergänzt die Vorrichtung 100 aus Figur 1 um eine weitere Kamera 120, die ebenfalls in einer Kommunikationsverbindung 121 mit der Auswerteeinheit 102 steht. Mit dieser weiteren Kamera 120 lassen sich weitere Aufnahmen von der periokularen Region 104 der bebrillten Person erfassen, wodurch sich fehlende Pixel aufgrund des Brillengestells für die endgültige brillenlose Abbildung der periokularen Region 104 ergänzen lassen. Dies wird zusätzlich dadurch begünstigt, dass die weitere Kamera 120 unter einem gegenüber der Kamera 101 abweichenden Neigungs- bzw. Aufnahmewinkel bezüglich des periokularen Bereichs 104 der bebrillten Person ausgerichtet ist.

Wie in Figur 3 rein schematisch illustriert ist, ergibt sich eine Verzeichnung der Gesichtszüge 115 aufgrund der Brechung des Lichts am Rand 116 der Brillengläser 114. Dadurch entstehen am Rand 116 der Brillengläser 114 Unstetigkeitsstellen und/oder Knickstellen im Linienverlauf des jeweiligen Gesichtszugs 115 der bebrillten Person. Dies lässt sich nachvollziehen, wenn man dem Verlauf 115a, 115b, 115c, 115d der diversen Gesichtszüge 115 folgt. Darüber hinaus wird sich der Verlauf 115a, 115b, 115c, 115d der Gesichtszüge 115 aufgrund der Krümmung der Linse der Brille kissenartig oder tonnenartig ausbreiten, so dass diese Verlaufsänderung ebenfalls erfasst werden kann. Anhand der so ermittelten Verzeichnung lässt sich wenigstens eine Regel für die einzelnen Pixel im Bereich des Brillenglases 114 ermitteln.

Das Verfahren zur Erzeugung eines brillenglaslosen oder brillenlosen Abbildung einer periokularen Region 104 von einer bebrillten Person, sieht dabei die folgenden Schritte vor:
A) Erfassen des periokularen Bereichs 104 der bebrillten Person mittels der Kamera 101, wobei von der Kamera 101 ausschließlich der Bereich erfasst wird, der durch fiktive Verbindungsgeraden zwischen den Merkmalspunkten 5.3 und 5.4 sowie 4.3 und 4.4 nach ISO/IEC 14496-2 (Stand: 1999) begrenzt und vorgegeben ist,
B) Identifizieren von Pixel eines Verlaufs 115a, 115b, 115c, 115d wenigstens eines Gesichtszugs 115 der bebrillten Person abseits eines Brillenrands 116 und abseits eines Brillenglases 114,
C) Erfassen derjenigen Pixel im Verlauf 115a, 115b, 115c, 115d des Gesichtszugs 115, die einer durch das Brillenglas 114 hervorgerufenen Verzeichnung des Gesichtszugs 115 entsprechen,
D) Ableiten oder Anwenden einer Regel aus dem Verlauf 115a, 115b, 115c, 115d der verzeichneten Pixel, und
E) Versetzen aller im Bereich des Brillenglases 114 enthaltenen Pixel entsprechend der ermittelten oder angewendeten Regel derart, dass die brillenlose Abbildung der periokularen Region 104 entsteht.

Für eine Identifizierung der bebrillten Person wird dann der Auswerteeinheit 102 ein Referenzbild bereitgestellt, wonach die brillenlose Abbildung der periokularen Region 104 mit dem Referenzbild verglichen wird. Das Referenzbild kann dabei auf einem Identitätsdokument angebracht sein, wobei das mit dem Referenzbild versehene Identitätsdokument mit dem Lesegerät 108 eingelesen wird, bevor es mit der brillenlosen Abbildung der periokularen Region 104 verglichen wird.

Um weitere Pixel, insbesondere hinter einem Gestell oder am Rand der Brille zu erfassen, hat es sich als vorteilhaft erwiesen, wenn nach einem ersten Erfassen der periokularen Region 104 und der Erzeugung einer ersten brillenlosen Abbildung der periokularen Region 104 geprüft wird, ob in der ersten Abbildung Pixel zur vollständigen Wiedergabe der periokularen Region 104 fehlen, und wenn die periokulare Region 104 wenigstens einmal erneut unter einem anderen Winkel als beim ersten Erfassen erfasst wird. Hierzu kann beispielsweise die weitere Kamera 120 gemäß Figur 2 Verwendung finden.

Es kann zu Beginn zudem vorab ermittelt werden, ob es sich bei der Brille um eine randlose Brille handelt oder ob die Brille ein Brillengestell aufweist. Dies kann beispielsweise über einen Kontrastverlauf oder eine Farberkennung erfolgen. Ist ein Brillengestell vorhanden, so werden mittels der Auswerteeinheit 102 die Gestellpixel in der ersten Abbildung ermittelt, die dem Brillengestell der Brille zugeordnet sind. Darüber hinaus werden diese substituiert, d.h. entfernt und durch andere Pixel ersetzt, um nicht nur eine brillenglaslose, sondern auch eine brillengestellose Abbildung der periokularen Region 104 zu erzeugen. Die Substitution des Brillengestells bzw. der Gestellpixel kann dabei bei sehr dünnen und unauffälligen Brillengestellen durch Extrapolation der zu den Gestellpixeln benachbarten Pixel erfolgen.

### BEZUGSZEICHENLISTE

- 100: Vorrichtung
- 101: Kamera
- 102: Auswerteeinheit
- 103: Projektionsmittel
- 104: periokulare Region
- 105: Spiegel
- 106: Strahlengang (Kamera)
- 107: Gehäuse
- 108: Lesegerät
- 109: Strahlengang (weitere Kamera)
- 113: Kommunikationsverbindung (Kamera)
- 114: Brillenglas
- 115: Gesichtszüge der bebrillten Person
- 115a: Verlauf (Gesichtszug)
- 115b: Verlauf (Gesichtszug)
- 115c: Verlauf (Gesichtszug)
- 115d: Verlauf (Gesichtszug)
- 116: Brillenrand / Brillengestell
- 120: weitere Kamera
- 121: Kommunikationsverbindung (weitere Kamera)

## Patentansprüche

1. Vorrichtung (100) zur Erzeugung einer brillenlosen Abbildung einer periokularen Region (104) von einer bebrillten Person, mit einer Kamera (101) zur Erfassung der periokularen Region (104) der Person, sowie mit einer mit der Kamera (101) verbundenen Auswerteeinheit (102), die mittels des von der Kamera (101) gelieferten Bilds ausgebildet ist,
- Pixel eines Verlaufs (115a, 115b, 115c, 115d) mindestens eines sich in der periokularen Region (104) befindlichen Gesichtzugs (115) der bebrillten Person abseits eines Brillenrands (116) und abseits eines Brillenglases (114) zu identifizieren,
- diejenigen Pixel im Verlauf (115a, 115b, 115c, 115d) des Gesichtszugs (115) zu erfassen, die einer durch das Brillenglas (114) hervorgerufenen Verzeichnung des Gesichtszugs (115) entsprechen,
- wenigstens eine Regel aus dem Verlauf (115a, 115b, 115c, 115d) der verzeichneten Pixel abzuleiten oder anzuwenden, und
- anschließend alle im Bereich des Brillenglases (114) enthaltenen Pixel entsprechend der ermittelten oder angewendeten Regel derart zu versetzen, dass die brillenlose Abbildung der periokularen Region (104) entsteht.

2. Vorrichtung (100) nach Anspruch 1, **dadurch gekennzeichnet, dass** die Auswerteeinheit (102) ausgebildet ist, die brillenlose Abbildung der periokularen Region (104) der bebrillten Person mit einem Referenzbild zu vergleichen.

3. Vorrichtung (100) nach Anspruch 2, **dadurch gekennzeichnet, dass** ein Lesegerät (108) vorhanden ist, das ausgebildet ist, ein mit dem Referenzbild versehenes Identitätsdokument einzulesen.

4. Vorrichtung (100) nach einem der Ansprüche 1 bis 3, **dadurch gekennzeichnet, dass** die Auswerteeinheit (102) ausgebildet ist, die Merkmalspunkte 5.3 und 5.4 sowie 4.3 und 4.4 nach der ISO/IEC 14496-2:1999 zu identifizieren und den Bereich des Bilds, der außerhalb eines durch die fiktive Verbindungsgeraden zwischen den Merkmalspunkten 5.3 und 5.4 sowie 4.3 und 4.4 nach der ISO/IEC 14496-2:1999 begrenzten Bereichs liegt, zu löschen oder unberücksichtigt zu lassen.

5. Vorrichtung (100) nach einem der Ansprüche 1 bis 3, **dadurch gekennzeichnet, dass** die Kamera (101) ausgebildet ist, ausschließlich den Bereich zu erfassen, der durch fiktive Verbindungsgeraden zwischen den Merkmalspunkten 5.3 und 5.4 sowie 4.3 und 4.4 nach ISO/IEC 14496-2:1999 begrenzt und vorgegeben ist.

6. Vorrichtung (100) nach einem der Ansprüche 1 bis 5, **dadurch gekennzeichnet, dass** die Auswerteeinheit (102) ausgebildet ist, die Verzeichnung des Verlaufs (115a, 115b, 115c, 115d) des Gesichtszugs (115) anhand einer Ermittlung von Unstetigkeitsstellen und/oder Knickstellen des Verlaufs zu ermitteln.

7. Zugangskontrolle umfassend eine Vorrichtung (100) nach einem der Ansprüche 1 bis 6, wobei die Auswerteeinheit (102) ausgebildet ist, die brillenlose Abbildung der periokularen Region (104) der bebrillten Person mit einem Referenzbild zu vergleichen und bei Übereinstimmung der brillenlosen Abbildung der periokularen Region (104) mit dem Referenzbild den Zugang zu gewähren und bei Abweichung den Zugang zu verweigern.

8. Zugangskontrolle nach Anspruch 7, **dadurch gekennzeichnet, dass** ein Lesegerät (108) vorhanden ist, das ausgebildet ist, ein mit dem Referenzbild versehenes Identitätsdokument einzulesen.

9. Verfahren zur Erzeugung eines brillenglaslosen oder brillenlosen Abbildung einer periokularen Region (104) von einer bebrillten Person, umfassend die Schritte:
A) Erfassen eines periokularen Bereichs (104) der bebrillten Person mittels einer Kamera (101),
B) Identifizieren von Pixel eines Verlaufs (115a, 115b, 115c, 115d) wenigstens eines Gesichtszugs (115) der bebrillten Person abseits eines Brillenrands (116) und abseits eines Brillenglases (114),
C) Erfassen derjenigen Pixel im Verlauf (115a, 115b, 115c, 115d) des Gesichtszugs (115), die einer durch das Brillenglas (114) hervorgerufenen Verzeichnung des Gesichtszugs (115) entsprechen,
D) Ableiten oder Anwenden einer Regel aus dem Verlauf (115a, 115b, 115c, 115d) der verzeichneten Pixel, und
E) Versetzen aller im Bereich des Brillenglases (114) enthaltenen Pixel entsprechend der ermittelten oder angewendeten Regel, derart, dass die brillenlose Abbildung der periokularen Region (104) entsteht.

10. Verfahren nach Anspruch 9, **dadurch gekennzeichnet, dass** der Auswerteeinheit (102) ein Referenzbild bereitgestellt wird, und dass die brillenlose Abbildung der periokularen Region (104) mit dem Referenzbild verglichen wird.

11. Verfahren nach Anspruch 10, **dadurch gekennzeichnet, dass** das Referenzbild auf einem Identitätsdokument angebracht ist, und dass das mit dem Referenzbild versehene Identitätsdokument mit einem Lesegerät (108) eingelesen wird, bevor es mit der brillenlosen Abbildung verglichen wird.

12. Verfahren nach einem der Ansprüche 9 bis 11, **dadurch gekennzeichnet, dass** die Auswerteeinheit (102) die Merkmalspunkte 5.3 und 5.4 sowie 4.3 und 4.4 nach der ISO/IEC 14496-2:1999 identifiziert und den Bereich, der außerhalb eines durch die fiktive Verbindungsgeraden zwischen den Merkmalspunkten 5.3 und 5.4 sowie 4.3 und 4.4 nach der ISO/IEC 14496-2:1999 begrenzten Bereichs liegt, zu löschen oder unberücksichtigt zu lassen.

13. Verfahren nach einem der Ansprüche 9 bis 11, **dadurch gekennzeichnet, dass** von der Kamera (101) ausschließlich der Bereich erfasst wird, der durch fiktive Verbindungsgeraden zwischen den Merkmalspunkten 5.3 und 5.4 sowie 4.3 und 4.4 nach ISO/IEC 14496-2:1999 begrenzt und vorgegeben ist.

14. Verfahren nach einem der Ansprüche 9 bis 13, **dadurch gekennzeichnet, dass** nach einem ersten Erfassen der periokularen Region (104) und der Erzeugung einer ersten brillenlosen Abbildung der periokularen Region (104) geprüft wird, ob in der ersten Abbildung Pixel zur vollständigen Wiedergabe der periokularen Region (104) fehlen, und dass die periokulare Region (104) wenigstens einmal erneut unter einem anderen Winkel als beim ersten Erfassen erfasst wird.

15. Verfahren zur Gewährung oder Verweigerung eines Zugangs von einer bebrillten Person, umfassend die folgenden Schritte:
- Erzeugen einer brillenlosen Abbildung mittels dem Verfahren nach einem der Ansprüche 9 bis 14,
- Vergleich der erzeugten brillenlosen Abbildung mit einem Referenzbild mittels der Auswerteeinheit (102),
- Gewähren des Zugangs bei einer Übereinstimmung der erzeugten brillenlosen Abbildung mit dem Referenzbild und Verweigern des Zugangs bei einer Abweichung der erzeugten Abbildung von der Referenzabbildung.
